# DEMANDE DE BREVET EUROPEEN

(11) **EP 0 599 668 A1**
(43) Date de publication de la demande: **01.06.1994**
(21) Numéro de dépôt: 93402027.2
(22) Date de dépôt: 06.08.1993
(51) Int. Cl.: G02C 5/00

(54) **Lunettes cosmetiques de maquillage "bel Oeil"**

(30) Priorité: 26.11.1992 ZA 929169
(71) Demandeur: Hattingh, Johan Tobias, Heidelberg (ZA); Tartarin, Catherine, F-92380 Garches (FR)
(72) Inventeur: Hattingh, Johan Tobias, Heidelberg (ZA); Tartarin, Catherine, F-92380 Garches (FR)
(74) Mandataire: Dawidowicz, Armand

(57) **Abrégé**

La présente invention s'applique aux personnes devant corriger leur vue en employant des moyens artificiels tels que les lunettes ou les lentilles de contact, et comprend une monture à verre simple - le verre unique étant adapté de façon à être déplacé devant l'un ou l'autre oeil afin de pouvoir clairement observer l'autre oeil pour se maquiller, metter en place une lentille de contact, ou même extraire un corps étranger de l'oeil - évidemment à l'aide de la réflection de l'oeil dans un miroir.

## Description

### DOMAINE DE L'INVENTION

Cette invention concerne les montures de lunettes et plus particulièrement une monture de lunettes à employer comme aide par une personne quand elle désire se maquiller les yeux et la zone qui entoure les yeux - ou bien comme aide pour une personne qui désire accomplir toute autre opération personnelle telle la mise en place d'une lentille de contact, ou l'extraction de l'oeil d'un cil gênant ou d'un corps étranger.

### ARRIERE-PLAN DE L'INVENTION

Se maquiller autour des yeux à toujours été un problème pour les porteurs de lunettes. Certains utilisateurs se contentent d'un verre grossissant. Bon nombre de personnes actuellement éprouvent des difficultés dans la mise en place de lentilles de contact si leur vue est gravement affaiblie. Plusieurs efforts ont été fait pour fournir une aide à ces utilisateurs comme indiqués par l'état de la technique antérieure ci-dessous.

### ETAT DE LA TECHNIQUE ANTERIEURE

MEILLET - USA - 4,880,302 - 14 nov 1989 - L'objet de cette invention est une monture de lunettes avec verre qui pivote sur un axe vertical monté sur le sommet de l'arcade de la monture, le verre étant alors adapté de façon à pivoter d'un d'un coté de la monture à l'autre, laissant ainsi la zone autour d'un des yeux dégagée quand le verre est placé devant l'autre oeil, Bien que l'invention parait fournir quelques avantages, elle a un défaut grave car - si le verre, par exemple, est convexe - le fait de faire pivoter le verre sur un axe vertical tel que décrit par MEILLET signifie qu'un oeil aura une vue normale avec le verre convexe, tandis que l'autre oeil verra le revers - un verre concave, il est clair que ceci va à l'encontre de l'objet même de l'invention.

Ce défaut pourrait nécessiter l'emploi de deux verres montés verticalement sur l'arcade, ce qui signifie qu'au moment de maquiller un oeil, le verre inutilisé se tiendra verticalement devant le nez de l'utilisateur, obstruant par conséquence la vue de l'autre oeil. La monture de lunettes telle que décrite par MEILLET ne prend pas en compte les utilisateurs potentiels ayant différentes ordonnances ophtalmiques pour le verre de chaque oeil. De tels utilisateurs devront sans doute se satisfaire d'une qualité de maquillage inférieure d'un coté du visage par rapport à l'autre.

Il faut noter que MEILLET décrit un verre monté sur la monture par moyen d'un dispositif vissé verticalement et dont le remplacement nécessite à la fois du temps et des outils.

Les défauts inhérents à l'invention telle que décrite par MEILLET tendent donc à aller à l'encontre de ses intentions en ce qui concerne le maquillage. Elle peut, cependant, satisfaire les utilisateurs de lentilles de contact car ils en ont seulement besoin pour un des yeux - une fois la première lentille de contact en place , la mise en place de la seconde ne pose plus de problème. Ceci nonobstant, l'étendue de l'invention de MEILLET est incontestablement restreinte en raison des défauts mentionnés ci-dessus.

HENRI GUILLET - FR 84 05179 - 29 Mars 1984 - qui a fait l'objet d'une décision de retrait le 11 Septembre 1985 - décrit une monture de lunettes avec un seul verre de pivotant autour d'un axe horizontal. Ceci surmonte évidemment une des limitations de l'invention telle que décrite par MEILLET,en ce qu'un verre pivotant sur un axe horizontal gardera sa concavité- ou sa convexité - inhérente quand il est placé devant l'un ou l'autre oeil. Cependant, elle manque d'adresser l'autre défaut par lequel les utilisateurs potentiels ayant des différences optalmiques pour chaque oeil seront effectivement exclus des des avantages prévus et sous entendus découlent de l'emploi de l'invention.

### OBJET DE LA PRESENTE INVENTION

Les perfectionnements qui font l'objet de la présente invention surmontent les défauts et les inconvénients des montures de lunettes ci-dessus et fournissent ainsi une aide polyvalente et améliorée à ceux qui doivent porter des appareils correcteurs ophtalmiques.

### L'INVENTION

L'invention propose la réalisation d'un dispositif comprenant une monture de lunettes supportée par une paire de branches, la monture comprenant une arcade intégrale dont le sommet est associé à un pivot autour duquel un seul verre bascule, en un arc vertical sur un axe essentiellement horizontal, d'un côté de la monture à l'autre, gardant ainsi la convexité ou la concavité intégrale du verre prescrit indépendamment du côté vers lequel il est déplacé.
Le pivot entre la monture et le verre unique étant adapté pour une fixation ou une séparation simple et rapide.

Dans la forme d'exécution préférée de l'invention, le verre a une configuration essentiellement en forme de goutte d'eau et s'enchâsse dans un cadre de forme semblable; ce cadre comprend un dispositif intégral en prolongement réalisé de façon à pouvoir se joindre à un dispositif semblable sur le sommet de l'arcade.

Dans une autre forme d'exécution préférée de l'invention, la monture ne comprend qu'une seule demi-monture, laissant ainsi la zone au-dessus de l'oeil observé entièrement dégagée pour tout traitement désiré en observant cet oeil à l'aide du verre correcteur et d'un miroir.

Dans encore une autre forme d'exécution préférée, le verre et son cadre peuvent être joints tous les deux au sommet de l'arcade de la monture de manière détachable et de façon à pouvoir pivoter, le joint d'accouplement complémentaire étant adapté pour permettre le remplacement rapide et facile d'un verre par un autre dans les cas où les yeux de l'utilisateur nécessitent différentes ordonnances correctrices ophtalmiques.

Dans une autre forme d'exécution préférée de l'invention, le joint d'accouplement entre le sommet de l'arcade et le cadre du verre comprend un joint à rotule, la rotule disposant de formations élastiques pour permettre à l'emboîtement de retenir la rotule de façon à ce qu'elle puisse pivoter, tout en fournissant un dispositif de détachement à la fois simple et rapide pour pouvoir remplacer remplacer le verre en peu de temps.

Dans une autre forme d'exécution préférée de l'invention, la monture à lunettes comprend une arcade conçue de telle façon qu'elle descende le long des deux cotés du nez jusqu'aux pommettes de l'utilisateur moyen ou même en dessous, la monture étant ensuite prolongée pour suivre le contour du visage jusqu'au point où les branches sont rattachées à la monture par moyen de charnières, les branches se prolongent ensuite vers l'arrière et remontent pour passer derrière les oreilles. De cette façon, les joues sont également dégagées pour permettre le maquillage - et la main qui maquille peut aussi être stabilisée en posant le petit doigt sur la monture. Cet élément de la conception contribuera considérablement à faciliter les nombreuses opérations délicates du maquillage, telle, par exemple, la pose de faux cils.

Dans une forme d'exécution préférée de l'invention, le cadre est adapté de façon à se nicher dans ses rainures en forme de " U " rémontées sur la monture, ces rainures étant placées tout au long de la surface de contact entre le cadre et la monture principale.

Dans le sens large de cette invention, le joint d'accouplement entre le cadre du verre et le sommet de l'arcade peut comprendre tous les dispositifs adaptés pivotables et/ ou détachables complémentaires, ces dispositifs complémentaires étant adaptés pour être raccordés ou séparés l'un de l'autre, par simple mouvement de la main, nécessitant aucune vis, goupille, rivet et/ou autre élément de fixation.

### EXECUTION DE L'INVENTION

La description de l'invention qui suit se réfère aux figures accompagnantes dans lesquelles :
FIGURE 1 est une vue tridimensionnelle de la monture de lunettes selon l'invention;
FIGURE 2 montre un joint d'accouplement possible entre la monture et le cadre du verre en vue par devant partielle;
FIGURE 3 est une coupe latérale d'une partie de l'arcade montrant un dispositif d'accouplement alternatif;
FIGURE 4 est une vue tridimensionnelle éclatée d'un autre joint d'accouplement alternatif;
FIGURE 5 est une vue semblable à la précédente mais montre un dispositif d'accouplement préféré en 3 dimensions; et
FIGURE 6 est une vue à grande échelle en 3 dimensions du joint d'accouplement figurant dans la figue 5, mais avec le sommet de l'arcade vu en coupe.
FIGURE 7 montre une photographie de l'invention avec le cadre dans la position centrale élevée; et
FIGURE 8 est une photographie de l'invention en train d'être utilisée avec le cadre et le verre placés devant l'oeil droit de l'utilisateur.

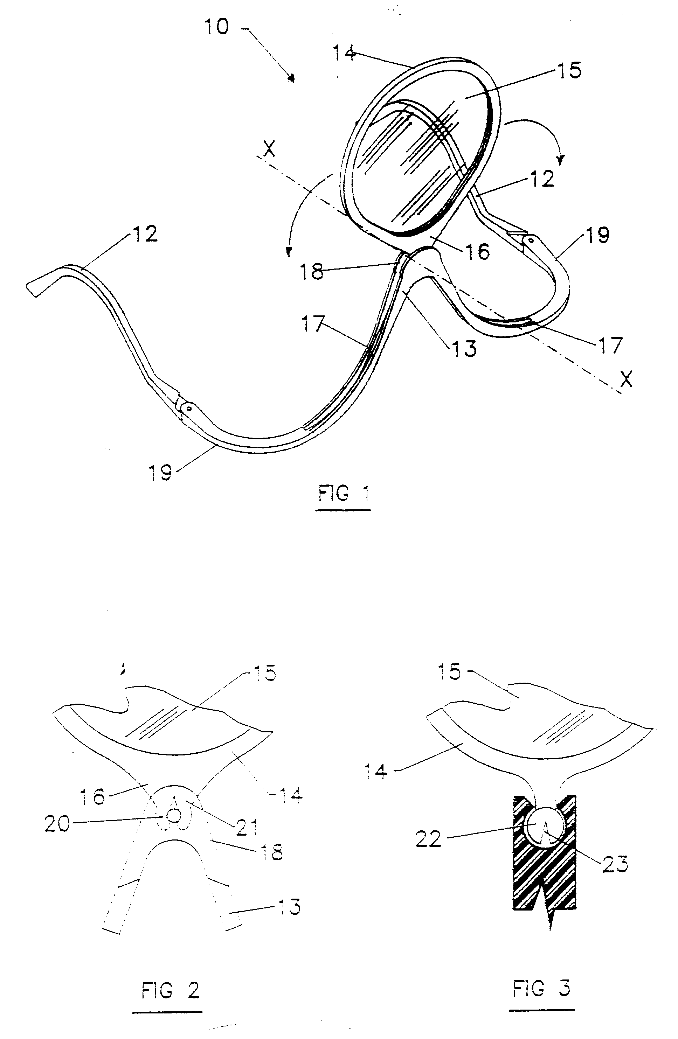

Se référant à la figure 1 - Une monture de lunettes 10 est représentée avec deux branches de soutien 12 et une arcade 13. Un cadre 14 est fourni pour enchâsser un verre 15, le cadre pivotant autour d'un axe horizontal X - X passant par l'arcade. En se référant à l'illustration on peut voir que la monture comprend seulement une moitié inférieure, laissant ainsi la zone autour de l'oeil dégagée et non obstruée sur un coté du visage pour le maquillage, pendant que l'autre oeil peut observer toute l'opération à travers le verre correcteur.

Il faut noter que le cadre et le verre sont conçus de façon à présenter un profil en forme de goutte d'eau afin de donner un plus grand champ de vue quand les objets sont regardés de près, et de dégager une zone plus grande pour faciliter le travail.

Le cadre comprend un dispositif en prolongement 16 conçu pour être joint à un dispositif complémentaire dans le sommet de l'arcade. Le cadre pivote à droite ou à gauche comme indiqué par les flèches. Il est adapté pour enchâsser dans les rainures en forme de " U " 17 réalisées sur le bord supérieur de la monture. Ces rainures fournissent un emplacement stable pour le cadre, empêchant ainsi tout mouvement du verre pendant son emploi. Pendant l'emploi de l'invention, il a été trouvé que la partie courbe en prolongement de la monture 19 fournissait un soutien pratique pour la main au cours d'opérations délicates de maquillage.

La Figure 2 montre un raccord simple, pivotable et détachable entre le cadre 14 et l'arcade 13, réalisé par un pivot 20 situé dans une rainure 18 sur l'arcade et le prolongement du cadre 16 comprenant un dispositif complémentaire 21 conçu pour permettre au cadre de pivoter en arc vertical d'un coté ou de l'autre de la monture comme le montre les flèches dans la figure 1. Bien entendu le cadre peut être fabriqué à partir d'une matière polymérique élastique permettant un raccord à encliqueter pour changer rapidement de verre dans les cas où les utilisateurs ont des yeux ayant besoin de verres à différentes ordonnances ophtalmiques.

Dans la Figure 3 un raccord alternatif pivotable et détachable est montré où le cadre forme un dispositif en balle 22 avec une forme en " V " inversé 23 sur la partie inférieure afin d'apporter l'élasticité nécessaire pour engager dans une cavité articulaire dans l'arcade.

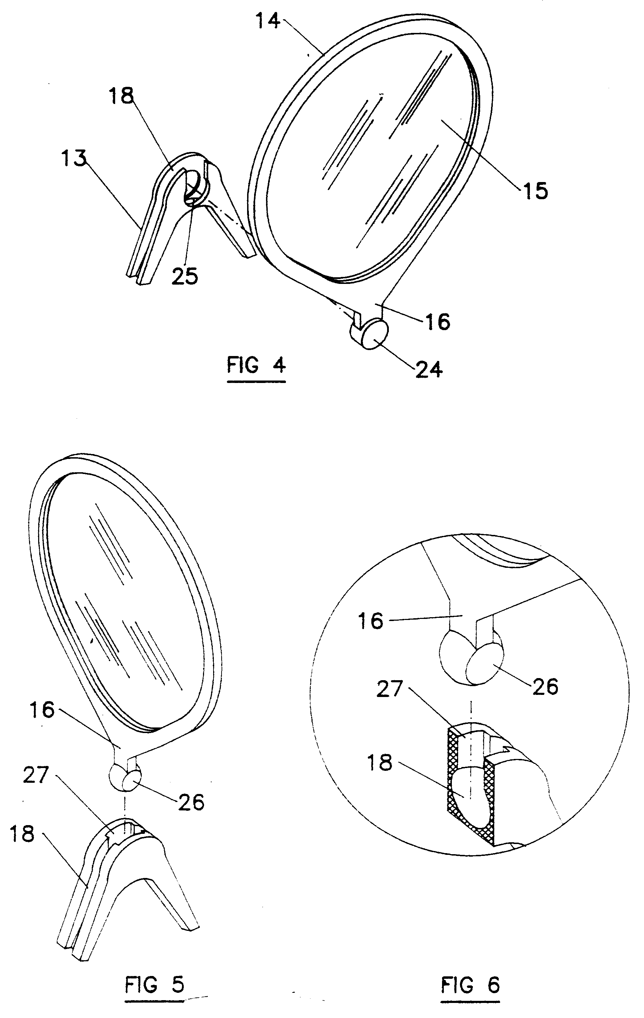

Se référant à la Figure 4, la vue alternative montre le cadre 14 et le verre 15 en forme de goutte d'eau avec la partie en prolongation 16 se terminant par une forme cylindrique 24 conçue de façon à s'emboîter dans le dispositif complémentaire 25 dans l'arcade 13, le cadre pouvant pivoter dans la rainure 18 de celle-ci, à gauche ou à droite de la monture de lunettes comme voulu.

Dans les figures 5 et 6 le joint d'accouplement préféré est montré dans lequel la formation en prolongement 16 du cadre se termine en balle 26, celle-ci étant tronquée sur ses deux faces latérales ce dispositif étant conçu pour s'emboiter dans la fente 27.

Une fois emboîtée à fond, le cadre subit une rotation de 90 degrés pour que la balle tronquée 26 soit prise dans l'arcade, tout en étant libre à tourner à gauche et à droite dans la rainure 18. Une rotation inverse de 90 degrés du cadre dans l'arcade permet de l'enlever par simple mouvement de la main.

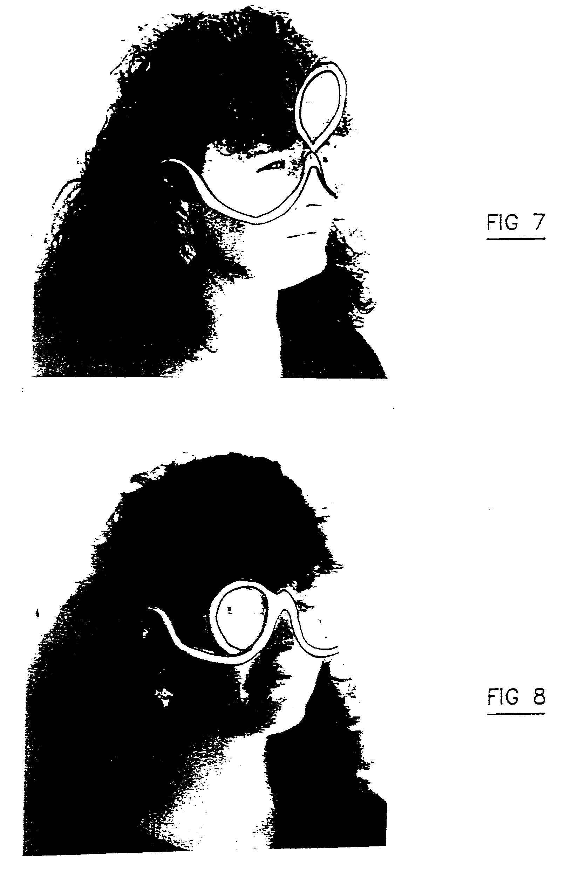

D'autres caractères de l'invention sont clairement illustrés dans les photographies des figures 7 et 8 qui ne nécessitent aucune description complémentaire.

Il est évident qu'une variété de raccords pivotables et/ou détachables peuvent être placés entre la monture et le cadre et qui tomberont toutes dans les revendications telles que faites par l'inventeur.

### LES AVANTAGES DE L'INVENTION

Les avantages de l'invention sont à toute évidence l'amélioration de l'état de la technique antérieure en ce que le verre pivotable garde sa forme convexe ou concave quand il bascule d'un coté à l'autre, et les verres peuvent être remplacés rapidement dans le cas de différentes ordonnances ophtalmiques. Il n'y a pas de doute que cette monture de lunettes trouvera des acheteurs immédiats parmi les femmes, mais elle pourra bien aussi intéresser les hommes surtout ceux qui portent des lentilles de contact.
Une seule monture peut, en effet, servir à toute la famille, chaque membre de la famille gardant son (ses) propre(s) verre(s). L'ensemble vendu par l'opticien pourrait consister en une seule monture avec un choix de cadres de plusieurs couleurs, chacun portant un verre dont l'ordonnance correspond aux besoins de chaque membre de la famille ou du groupe.

## Revendications

1. Monture de lunettes 19 comprenant un verre unique 15 avec ou sans cadre 14 caractérisée en ce que le dit verre unique avec ou sans cadre 14 a une forme en goutte d'eau assemblées centralement et de façon pivotante avec la monture. Le verre pivotant sur un axe essentiellement horizontal et à l'aide d'un moyen d'accouplement permettant un assemblage et une séparation rapide de la monture du verre par simple mouvement de la main.

2. Monture de lunettes 19 suivant la revendication 1, caractérisée en ce que la monture de lunettes 19 consiste uniquement de la partie inférieure d'une monture avec arcade intégrale 13.

3. Monture de lunettes 19 suivant la revendication 1, caractérisée en ce que le verre s'enchâsse dans le cadre 14.

4. Monture de lunettes 19 suivant les revendications 1 ou 3, caractérisée en ce que la monture de lunettes 19 est soutenue par une paire de branches 12 à charnières conçues de façon à s'étendre jusqu'à ou en dessous de la zone des pommettes.

5. Monture de lunettes 19 suivant la revendication 2, caractérisée en ce que l'arcade s'étend en bas le long des deux cotés du nez de façon à permettre à la monture de se prolonger vers l'arrière sur et en dessous des pommettes et de là de suivre le contour des joues jusqu'au point où sont fixées les branches 12 qui se prolongent ensuite en arrière et vers le haut pour passer derrière les oreilles, dégageant ainsi une zone plus grande de la partie supérieure de la joue de l'utilisateur joue de l'utilisateur pour le maquillage.

6. Monture de lunettes 19 suivant la revendication 3 caractérisée en ce que le verre 15 et le cadre 14 sont réalisés de façon à présenter un profil ou une configuration essentiellement en forme de goutte d'eau.

7. Monture de lunettes 19 suivant les revendications 1 ou 3, caractérisée en ce que le cadre 14 comprend un dispositif intégral en prolongement 16 adapté de façon à être raccordé en pivotant à une formation complémentaire sur le sommet de l'arcade 20,22,24,26 formations complémentaires sur les deux éléments étant adaptées pour permettre un assemblage rapide et sûr, et une séparation rapide - les deux actions étant réalisées par simples mouvements de la main.

8. Monture de lunettes 19 suivant une ou plusieurs des revendications 1, 3 ou 5, caractérisés en ce que le moyen d'accouplement entre 1' arcade 13 et le cadre 14 exclu l'addition de vis en métal, de goupilles, des rivets, et/ou de tous autres éléments de fixation étrangers semblables.

9. Monture de lunettes 19 suivant les revendications 1 ou 3, caractérisée en ce que le moyen d'accouplement entre l'arcade 13 et le cadre 14 comprend un moyen à rotule, la rotule, ou l'arcade 13 ayant des dispositifs souples permettant de la soustraire à la cavité articulaire par un petit mouvement de la main, mais avec assez d'élasticité pour que le moyen d'accouplement garde son intégralité pendant un usage normal.

10. Monture de lunettes 19 suivant les revendications 1 ou 3, caractérisée en ce qui concerne que le moyen d'accouplement entre le cadre du verre 14,15 et l'arcade 13 comprend une formation complémentaire pivotable et faclement détachable

11. Monture de lunettes 19 suivant les revendications 1, 2 ou 3, caractérisée en ce que le cadre 14 est adapté de façon à se nicher dans des rainures en forme de " U " 17 réalisées dans la monture ces rainures étant situées tout le long de la surface de contact entre le cadre 14 et la monture de lunettes 19 qui sert de soutien.

12. Monture de lunettes 19 suivant n'importe laquelle des revendications précédentes, caractérisées en ce qu'une monture de lunettes unique est adaptée de façon à permettre un nombre illimité de cadres 14 avec des verres d'ordonnance ophtalmique différentes d'y être montés les cadres 14 étant adaptés pour avoir une couleur différente et/ou des marques distinctes d'identification pour faciliter l'emploi dans le cas d'utilisateurs multiples.

13. Monture de lunettes 19 essentiellement suivant les illustrations et les descriptions des figures accompagnantes.

14. Monture de lunettes 19 essentiellement suivant les photographies accompagnantes.
